# EUROPEAN PATENT SPECIFICATION

(11) **EP 0 629 457 B1**
(45) Date of publication and mention of the grant of the patent: **08.03.2000**
(21) Application number: 94107870.1
(22) Date of filing: 20.05.1994
(51) Int. Cl.: B21D 28/12, B23D 27/00, B23D 15/00

(54) **Punching machine**
Stanzmaschine
Poinçonneuse

(30) Priority: 26.05.1993 IT BO930240; 24.06.1993 IT BO930290
(43) Date of publication of application: 21.12.1994
(73) Proprietor: RAINER S.r.l., I-40012 Calderara di Reno (IT)
(72) Inventor: Raimondi, Stefano, I-40133 Bologna (IT)
(74) Representative: Jorio, Paolo, Dr. Ing.

(56) References cited:
- EP-A- 0 096 435
- DE-A- 2 442 547
- GB-A- 2 098 910
- JP-A- 59 087 936
- US-A- 4 250 784
- US-A- 4 703 678
- US-A- 4 738 173
- TOOLING AND PRODUCTION, vol.43, no.6, September 1977, SOLON US pages 100 - 101 CLARK 'countour nibbling for the punch press'
- ENGINEERS DIGEST, vol.36, no.11, November 1975, LONDON GB pages 19 - 21 'N/C sheet-metal machining centres'
- PATENT ABSTRACTS OF JAPAN vol. 10, no. 357 (M-540) (2414) 2 December 1986 & JP-A-61 154 721 (ANRITSU) 14 July 1986
- PATENT ABSTRACTS OF JAPAN vol. 8, no. 197 (M-324) (1634) 11 September 1984 & JP-A-59 087 936 (HITACHI)

## Description

The present invention relates to a turret punching machine as defined in the preamble of claim 1 and disclosed in US-A-4738173.

As is known, punching machines of the aforementioned type comprise a revolving upper turret supporting a number of punches; a revolving lower turret supporting a number of dies; a carriage for feeding a metal sheet along the work surface; and a work station in which the punch is pressed onto the sheet by a hammer. For additional machining of the sheet, provision is made in the punching machines for a shearing assembly.

It is an object of the present invention to provide a punching machine with a shearing assembly designed to cut corners and linear parts.

According to the present invention, there is provided a sheet metal punching machine as defined in claim 1.

A preferred, non-limiting embodiment of the present invention will be described by way of example with reference to the accompanying drawings, in which:
Figure 1 shows a side view of an embodiment of a punching machine in accordance with the teachings of the present invention;
Figure 2 shows a section of a tool holder on the Figure 1 machine;
Figure 3 shows a plan view of a shearing tool;
Figure 4 shows a view along line IV-IV in Figure 3;
Figure 5 shows a larger-scale plan view of a die holder on the Figure 1 machine;
Figure 6 shows a section along line VI-VI in Figure 5;
Figure 7 shows a partial larger-scale view of a tool holder for a tool differing from that in Figure 2;
Figure 8 shows a front view of the Figure 7 tool;
Figure 9 shows a section of another tool holder on the Figure 1 machine;
Figure 10 shows a view along line X-X in Figure 9;
Figure 11 shows a plan view of a shearing tool differing from that in Figure 3;
Figure 12 shows a view along line XII-XII in Figure 11;
Figure 13 shows a view along line XIII-XIII in Figure 11;
Figure 14 shows a plan view of a die differing from that shown in Figure 5;
Figure 15 shows a view along line XV-XV in Figure 14.

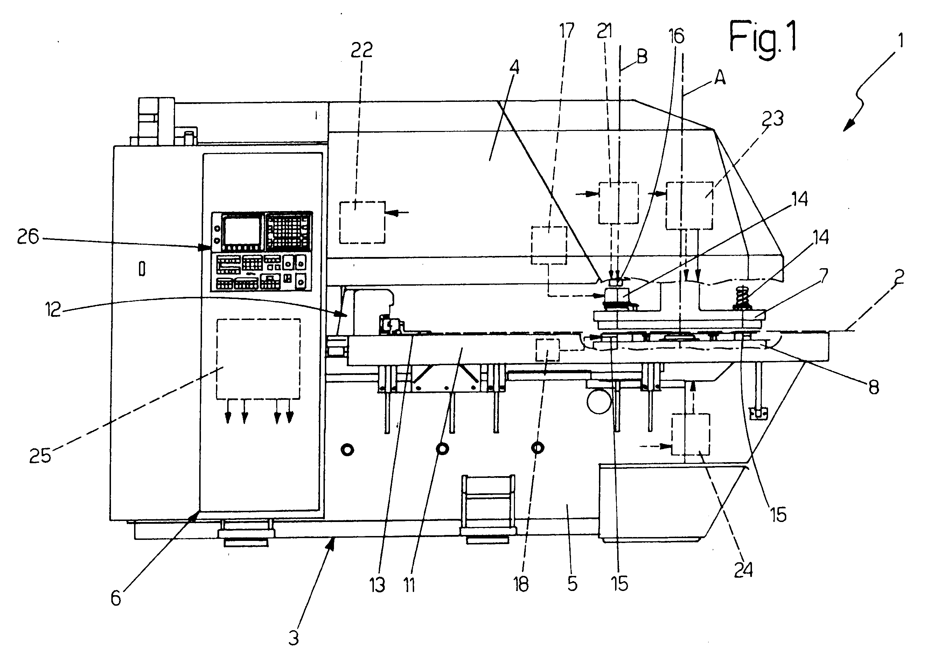

Number 1 in Figure 1 indicates a machine for punching a metal sheet 2 (shown by the dotted line) and comprising a C-frame 3 in turn presenting an upper portion 4, a lower portion 5, and a lateral portion in which is defined a cabinet 6.

Machine 1 also comprises:
an upper turret 7 revolving about a vertical axis A and supported on upper portion 4 of frame 3;
a lower turret 8 revolving about axis A and supported on lower portion 5 of frame 3;
a work surface 11;
a carriage 12 for gripping sheet 2 by means of grippers 13 and feeding it on work surface 11;
a number of punches 14 supported about the periphery of turret 7;
a number of dies 15 supported about the periphery of turret 8;
a hammer 16 traveling along a vertical axis B;
a device 17 for rotating punch 14 about its vertical axis;
a device 18 for rotating die 15 about its vertical axis;
a device 21 for moving hammer 16 along axis B;
a device 22 for controlling carriage 12;
a device 23 for rotating turret 7 about axis A;
a device 24 for rotating turret 8 about axis A; and
an electronic control system 25 housed in cabinet 6, with a control panel 26 for controlling operation of machine 1 and, in particular, devices 17, 18, 21, 22, 23 and 24 which, being known, are shown only schematically.

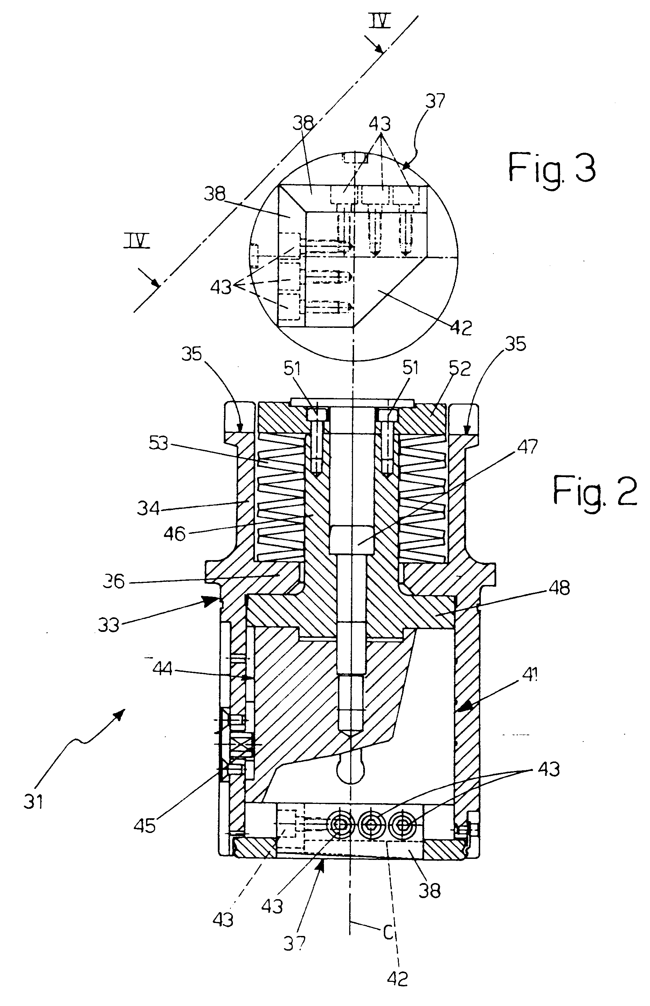

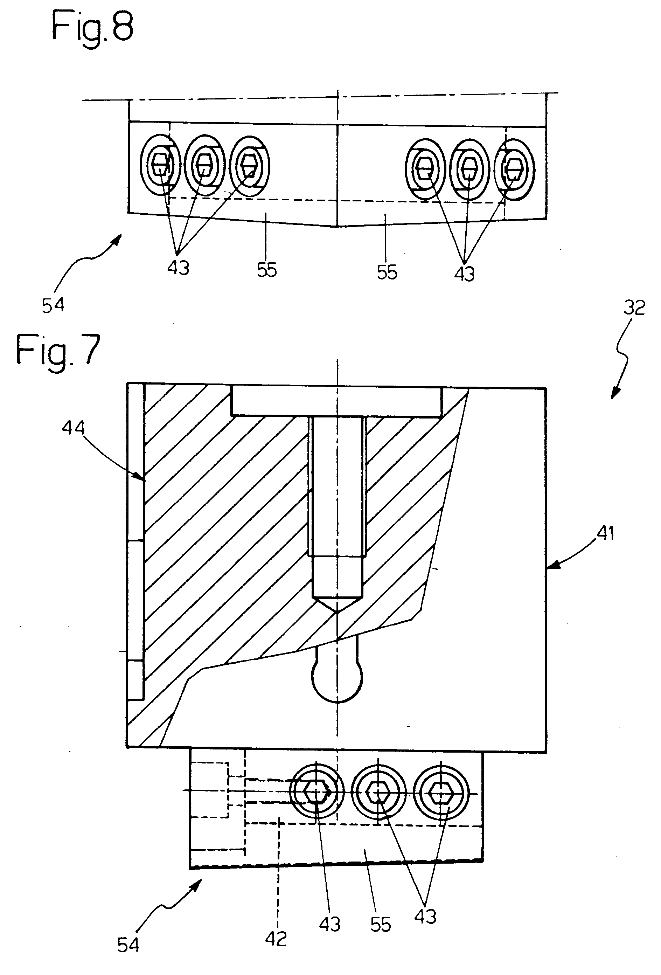

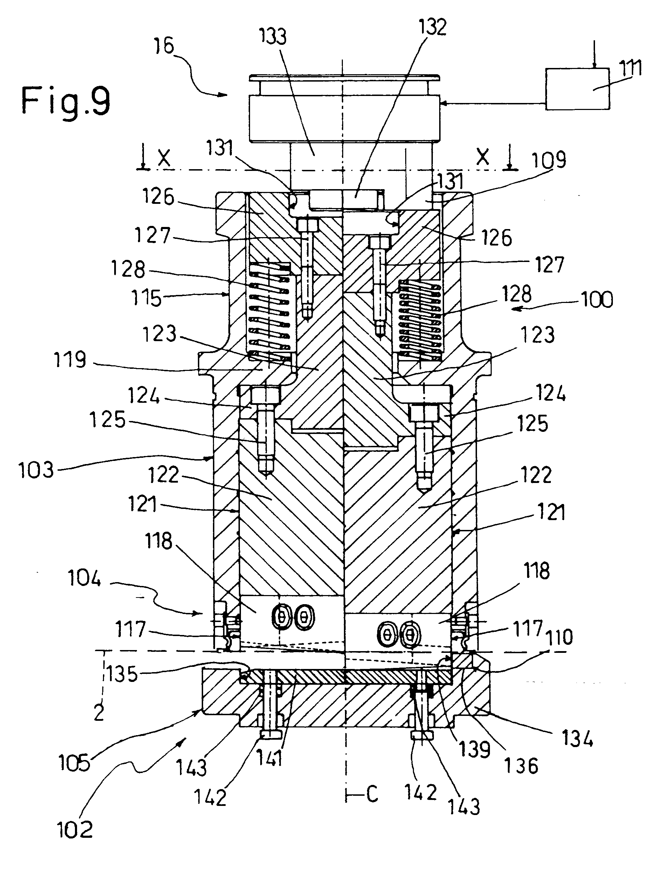

The machine 1 presents at least a shearing assembly 31 comprising one shear (Figure 2), at least a notching/slotting assembly 32 (Figure 7), and a shearing assembly 100 comprising two shears 117 (Figures 9-11), so that punching, shearing and notching/slotting operations may all be performed on the same machine.

With reference to Figure 2, assembly 31 comprises a holder 33 supported on turret 7 and in turn supporting a shearing tool 37. Holder 33 presents a tubular body 34 with an axis C, and which, at the top end, presents a number of recesses 35 engaged by teeth (not shown) on a mechanical member of device 17, to enable device 17 to rotate body 34 about axis C. Body 34 also presents a central inner annular flange 36.

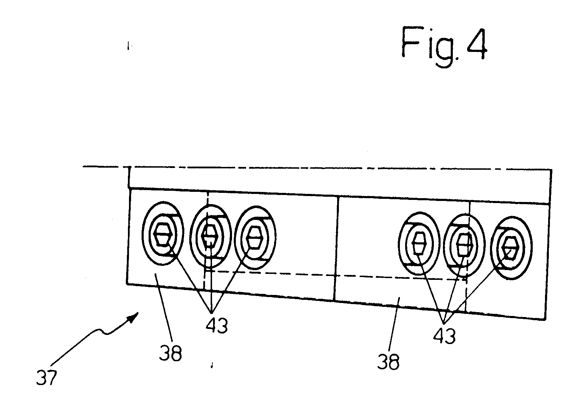

With reference to Figures 2, 3 and 4, shearing tool 37 comprises two cutting blades 38 defined in vertical planes and arranged square. The cutting edge of a first blade 38 is defined along an upwardly-oblique segment in relation to the horizontal plane; and the cutting edge of the second blade 38 is also defined along an upwardly-oblique segment, but as a continuation of the cutting edge of the first blade 38, as shown in Figure 4. Blades 38 are preferably the same length.

With reference to Figure 2, holder 33 comprises a substantially cylindrical member 41 housed coaxially inside body 34, beneath flange 36, and which provides for supporting shearing tool 37 and for transmitting to it the linear movement imparted by hammer 16. For this purpose, the faced bottom end 42 of member 41 presents two contiguous vertical faces perpendicular to each other, and each fitted by means of screws 43 with a respective blade 38. The lateral wall of member 41 presents a groove 44 having an axis parallel to axis C, and engaged by a pin 45 on body 34, for rendering body 34 and member 41 angularly integral with each other. Holder 33 also comprises a second substantially cylindrical member 46 housed coaxially inside body 34, over flange 36, and which provides, by means of a screw 47, for supporting member 41 and transmitting to it the linear movement imparted by hammer 16. The bottom end of member 46 presents an annular flange 48 located between flange 36 and an annular projection defined on the upper face of member 41. By means of screws 51, the top end of member 46 supports a disk 52, between which and the upper face of flange 36 there are provided preloaded spring means 53 for forcing member 41 upwards into a top limit position wherein flange 48 contacts flange 36, and shearing tool 37 is housed inside body 34 as shown in Figure 2.

Notching/slotting assembly 32 presents a notching/slotting tool 54 comprising two cutting blades 55 defined in vertical planes and arranged square. The cutting edge of a first blade 55 is defined along a downwardly-oblique segment in relation to the horizontal plane; and the cutting edge of the second blade 55 is also defined along an oblique segment, but upwardly-oblique as shown in Figure 8. Blades 55 are preferably the same length. In Figure 7, notching/slotting assembly 32 is shown only partially in that, apart from the different design of the tool, it is identical to shearing assembly 1.

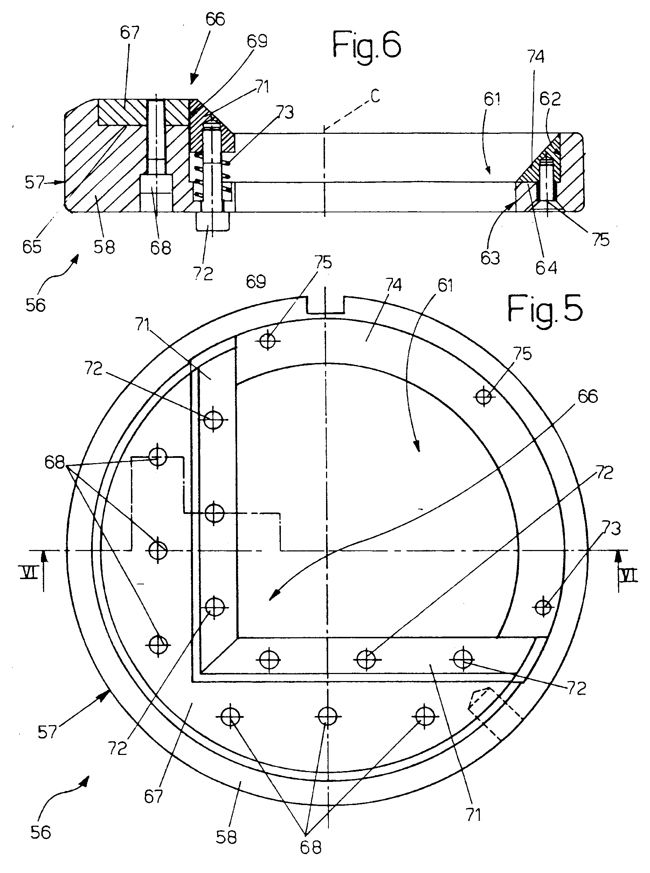

Shearing assembly 31 and notching/slotting assembly 32 each present a die assembly 56 (Figures 5 and 6) comprising a holder 57 with a body 58 of axis C supported, like the known punch die assemblies, on lower turret 8. Body 58 is externally cylindrical, and presents a central through cavity 61 in turn presenting a cylindrical bottom portion 63, and a top portion 62 defined peripherally by two flat vertical faces perpendicular to each other, and by a third vertical face describing an arc of a circle. Between portions 62 and 63, a shoulder 64, with the same periphery as portion 62, is defined by two flat horizontal faces perpendicular to each other, and by a third perpendicular face describing an arc of a circle. The upper face of body 58 also presents a second shoulder 65 which is externally semiannular, and defined internally by the perpendicular faces of portion 62 of cavity 61.

With reference to Figures 5 and 6, holder 57 presents a die 66 comprising a plate 67 with the same periphery as shoulder 65 to which it is fitted by means of screws 68. Plate 67 is formed internally by a recess 69 which defines two flat faces perpendicular to each other and in line with the (perpendicular) faces of portion 62 of cavity 61. The faces of recess 69 and the upper edges of the faces constitute counterblades and cutting edges respectively. The thickness of plate 67 is substantially equal to the depth of shoulder 65. Holder 57 also presents two plates 71 located along the counterblade faces of recess 69, fitted to screws 72, and movable parallel to themselves to and from cavity 61. The movement of plates 71 towards cavity 61 is opposed by springs 73 fitted to screws 72. Finally, holder 57 presents a plate 74 describing an arc of a circle, and which is fitted by means of screws 75 to the arc-shaped portion of shoulder 64.

In use, machine 1 can perform punching, shearing and/or notching/slotting operations depending on the tool set beneath hammer 16. Shearing normally consists in cutting sheet 2 commencing from the edge of the sheet; whereas slotting consists in making an L-shaped cut in a portion of the sheet away from the edge.

To shear sheet 2 along a given cutting axis, shearing assembly 31 and corresponding die assembly 56 are set coaxially with hammer 16; holder 33 is rotated to align the first blade 38 of shearing tool 37 with the cutting axis; holder 57 is rotated to align the corresponding counterblade with said first blade 38; and, by pressing member 46 downwards by means of hammer 16, member 46 moves member 41 and hence shearing tool 37 downwards by the same amount, so that first blade 38 cuts sheet 2. After each cut, sheet 2 is moved to make successive cuts in line with one another. At this shearing stage, only first blade 38 comes into play, so that the travel of hammer 16 and hence shearing tool 37 is limited, and substantially equals the travel of shearing tool 37 to exit body 34 and contact sheet 2, plus a distance of less than the difference in height between the extreme points of first blade 38.

For subsequently cutting the sheet along a second axis perpendicular to the first, the first cut along the second axis is made by second blade 38 of shearing tool 37, by simply increasing the travel of hammer 16 so that second blade 38 also comes into play; while subsequent cuts along the second axis are made by first blade 38, by simply repeating the above operations to align first blade 38 and the corresponding counterblade of die 66 with the second cutting axis.

For notching/slotting sheet 2 along two perpendicular cutting axes, notching/slotting assembly 32 and corresponding die assembly 56 are set coaxially with hammer 16; holder 33 is rotated to align blades 55 of notching/slotting tool 54 with the respective cutting axes; holder 57 is rotated to align the counterblades of die 66 with blades 55; and, by pressing member 46 downwards by means of hammer 16, member 46 moves member 41 and hence notching/slotting tool 54 downwards by the same amount, so that blades 55 cut sheet 2.

Number 100 in Figure 9 indicates a shearing assembly supported on turret 7 and designed differently from that in Figure 2. Shearing assembly 100 comprises a tool holder 103 fitted with a shearing tool 104, and presents a die assembly 102 supported on turret 8 and comprising a die holder 105 fitted with a die 110. Holders 103 and 105 rotate about axis C in the same way as holders 33 and 57; and hammer 16 presents a striking member 109, and a device 111 (controlled by system 25) for rotating member 109 about axis B.

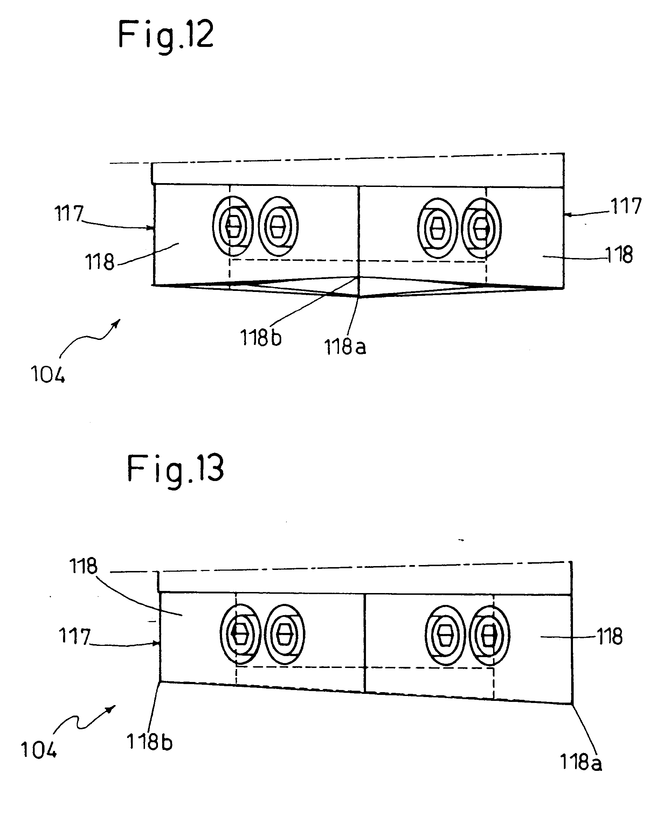

With reference to Figures 9 and 12, holder 103 comprises a tubular body 115 of axis C, with a central inner annular flange 119. Shearing tool 104 comprises two shears 117, each defined by two cutting blades 118 defined in vertical planes and arranged square. The cutting edge of a first blade 118 of each shear 117 is defined along an upwardly-oblique segment in relation to the horizontal plane; and the cutting edge of the second blade 118 is also defined along an upwardly-oblique segment, but as a continuation of the cutting edge of the first blade 118, as shown in Figure 13. The first blades 118 of shears 117 are contiguous, so that shearing tool 104 presents a corner 118a defined by the starting points of the cutting edges of the two first blades 118; and a corner 118b defined by the end points of the cutting edges of the two second blades 118. Corner 118b is higher than corner 118a, as shown in Figure 12. Blades 118 of shears 117 are the same length, so that, viewed from above (Figure 11), shearing tool 104 is square in shape.

With reference to Figure 9, holder 103 comprises two members 121 housed symmetrically with each other inside body 115 and, more specifically, symmetrically in relation to the vertical plane containing axis C. Members 121 provide for supporting a respective shear 117 and for transmitting to it the linear movement imparted by hammer 16. Each member 121 comprises a semicylindrical bottom body 122 housed inside body 115, beneath flange 119, and the L-section bottom end of which is fitted by means of screws with a respective shear 117. Member 121 also comprises a semicylindrical central body 123 smaller in diameter than the inside diameter of flange 119, and the bottom end of which presents a semiannular flange 124. Flange 124 is located beneath flange 119, while the rest of body 123 extends above flange 119. Bodies 122 and 123 of each member 121 are fitted together by screws 125 connecting flange 124 of body 123 integral with the top end of respective body 122.

With reference to Figure 9, member 121 also comprises a semicylindrical top body 126 mounted on top of respective body 123 and, more specifically, fitted to body 123 by screws 127 close to axis C. Between a portion of the lower face of body 126 and flange 119, there is fitted a preloaded spring 128 which provides for forcing respective member 121 upwards into a top limit position wherein flange 124 contacts flange 119, and shear 117 is housed inside body 115, as shown on the left in Figure 9. Close to axis C, the upper face of body 126 presents a semicylindrical recess 131 with its open side facing recess 131 in the other body 126.

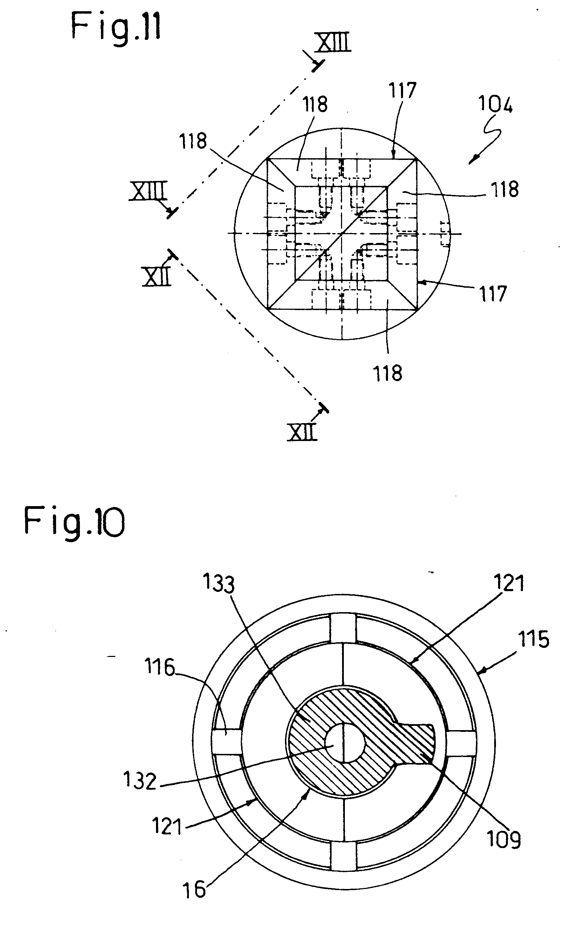

With reference to Figures 9 and 10, hammer 16 comprises a cylindrical portion 132 of axis B and smaller in diameter than the total diameter of recesses 131; and a tubular body 133 of axis B, connected in angularly-free, axially-fixed manner to portion 132, and from which striking member 109 extends downwards parallel to axis B. Device 111 provides for rotating body 133, and hence for equally rotating striking member 109, about axis B.

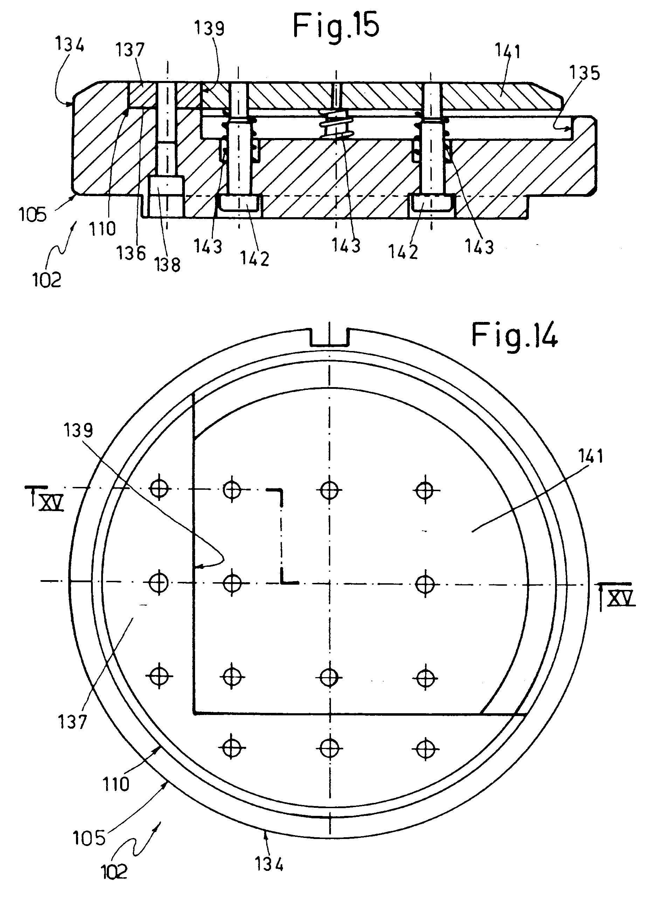

With reference to Figures 9, 14 and 15, holder 105 of assembly 102 comprises an externally cylindrical body 134, the upper face of which presents a central cavity 135 defined peripherally by two flat faces perpendicular to each other, and by a third face describing an arc of a circle. The upper face of body 134 also presents a shoulder 136 which is externally semiannular, and defined internally by the perpendicular faces of cavity 135.

With reference to Figures 9, 14 and 15, die 110 comprises a plate 137 having the same periphery as shoulder 136 to which it is fitted by means of screws 138. Plate 137 is formed internally by a recess 139 which defines two flat faces perpendicular to each other and in line with the (perpendicular) faces of cavity 135. The faces of recess 139 and the upper edges of the faces constitute counterblades and cutting edges respectively. The thickness of plate 137 is substantially equal to the depth of shoulder 136.

With reference to Figures 9, 14 and 15, recess 139 houses a plate 141 having the same periphery as cavity 135, and defined by two flat faces perpendicular to each other and facing said faces of recess 139, and by a third face describing an arc of a circle. Plate 141 is fitted by means of movable screws 142 to body 134, and is free to move parallel to itself to and from cavity 135. The movement of plate 141 towards cavity 135 is opposed by springs 143 fitted to screws 142.

In use, to shear sheet 2 along a given cutting axis, holder 103 is rotated to align the first blade 118 of a shear 117 with the cutting axis; holder 105 is rotated to align the corresponding counterblade with said first blade 118; body 133 is rotated so that striking member 109 corresponds with member 121 supporting the working shear 117; and, by pressing member 109 downwards, member 109 moves member 121 and hence shear 117 downwards by the same amount, so that first blade 118 cuts sheet 2. After each cut, sheet 2 is moved to make successive cuts in line with one another. At this shearing stage, only first blade 118 comes into play, so that the travel of member 109 and hence shear 117 is limited, and substantially equals the travel of shear 117 to exit body 115 and contact sheet 2, plus a distance of less than the difference in height between the extreme points of first blade 118. In the meantime, the other shear 117 remains idle inside body 115.

For subsequently cutting the sheet along a second axis perpendicular to the first, the first cut along the second axis is made by the second blade 118 of shear 117, by simply increasing the travel of the striking member so that the second blade 118 also comes into play, naturally during the same stroke of shear 117; while subsequent cuts along the second axis are made by the first blade 118, by simply repeating the above operations to align the first blade 118 and the corresponding counterblade of die 110 with the second cutting axis. Depending on the direction (clockwise or anticlockwise) of the overall shape being cut, the most appropriate shear 117 for the purpose may be selected; and, by virtue of disposing of two shears 117, these may be used successively for cutting particular shapes with no need to rotate sheet 2.

One machine with one work surface and one sheet feed member provides for performing various machining operations, such as punching, shearing and notching/slotting. As such, the machine provides for a high degree of versatility; reducing machinery investment; reducing machining time; and for reducing machining cost, both for the reasons stated above, and the fact that the machine performs even different types of operations automatically.

Moreover, by virtue of presenting a shearing assembly featuring two right-angle shears usable independently, machine 1 involves no changeover of the shearing tool, and hence no downtime, for cutting in a given (clockwise or anticlockwise) direction. The possibility of indifferently employing one or other of the shears, and adjusting the angular position of the shears and the striking member in relation to axis C, provides for a high degree of performance of machine 1 with no need for rotating sheet 2, which, as is known, is the major cause of positioning errors of sheet 2 in relation to the reference points which, in the event the sheet is rotated, must be reset.

Clearly, changes may be made to machine 1 as described and illustrated herein within the definition of the scope of the present invention.

In particular, machine 1 may feature a number of shearing and notching/slotting assemblies and, for example, assemblies with blades arranged at an angle greater or smaller than 90°; or provision may be made for shearing assemblies with a shearing tool suitable for cutting in a given (clockwise or anticlockwise) direction, with the advantage that machine 1 involves no downtime for changing the shearing tool.

As regards shearing assembly 100, the two shears, and hence the corresponding counterblades, may be designed differently to adapt to the type of material being cut; the blades of the shears may be arranged at an angle greater or smaller than 90°.

## Claims

1. A sheet metal punching machine comprising:
- an upper turret (7) revolving about a first vertical axis (A);
- a lower turret (8) revolving about said first axis (A);
- a work surface (11);
- a carriage (12) for gripping and feeding said sheet (2) on said work surface (11);
- a number of punches (14) supported on said upper turret (7);
- a number of first dies (15) supported on said lower turret (8);
- a hammer (16) travelling along a second vertical axis (B);
- at least a shearing assembly (100) supported on said upper turret (7); and
- a corresponding first die assembly (56, 102) supported on said lower turret (8);
said shearing assembly (100) comprising:
a shearing tool holder (103);
two independent members (121) housed in said shearing tool holder (103) and a shearing tool (104) fitted to said shearing tool holder (103), characterised in that the shearing tool comprises two shears (117), each shear being defined by two angled cutting blades (118) lying in vertical planes and at a given angle in relation to each other, a first blade (118) presenting a cutting edge defined along an upwardly-oblique segment in relation to the horizontal plane; and a second blade (118) presenting a cutting edge also defined along an upwardly-oblique segment, but as a continuation of the cutting edge of said first blade (118);
the shearing assembly being further characterised in that the two independent members (121) housed in said shearing tool holder (103) are each fitted with a respective shear (117), and are each independently transmitting to its respective shear (117) the linear movement imparted by said hammer (16); the machine being further characterised in that the hammer (16) can execute different strokes.

2. A machine as claimed in Claim 1, characterized in that it comprises at least a notching/slotting assembly (32) supported on said upper turret (7); and a corresponding second die assembly (56) supported on said lower turret (8).

3. A machine as claimed in Claim 1, characterized in that said shearing assembly (31) comprises:
a first tool holder (33) supported on said upper turret (7);
a shearing tool (37) defined by two cutting blades (38), a first blade (38) presenting a cutting edge defined along an upwardly-oblique segment in relation to the horizontal plane, and the second blade (38) presenting a cutting edge also defined along an upwardly-oblique segment, but as a continuation of the cutting edge of said first blade (38);
a member (41) housed in said first tool holder (33), supporting said shearing tool (37), and transmitting to said shearing tool (37) the linear movement imparted by said hammer (16); and
preloaded spring means (53) for counteracting the downward movement of said shearing tool (37).

4. A machine as claimed in Claim 2, characterized in that said notching/slotting assembly (32) comprises:
a second tool holder (33) supported on said upper turret (7);
a notching/slotting tool (54) defined by two cutting blades (55), a first blade (55) presenting a cutting edge defined along a downwardly-oblique segment in relation to the horizontal plane, and the second blade (55) presenting a cutting edge also defined along an oblique segment, but an upwardly-oblique segment;
a member (41) housed in said second tool holder (33), supporting said notching/slotting tool (54), and transmitting to said notching/slotting tool (54) the linear movement imparted by said hammer (16); and
preloaded spring means (53) for counteracting the downward movement of said notching/slotting tool (54).

5. A machine as claimed in Claims 3 and 4, characterized in that said first and second die assemblies (56) comprise:
a third tool holder (57) supported on said lower turret (8) coaxially with the respective said first (33) and second (33) tool holder;
a cavity (61) formed in said third tool holder (57) and defined peripherally by two flat vertical faces perpendicular to each other, and by a third vertical face describing an arc of a circle;
a first shoulder (64) formed in said cavity (61) and presenting two flat horizontal faces perpendicular to each other, and a perpendicular face describing an arc of a circle;
a second shoulder (65) formed on the upper face of said third tool holder (57) and presenting a semiannular outer edge, and an inner edge defined by the perpendicular faces of said cavity (61); and
a die (66) which comprises a plate (67) fitted to said second shoulder (65) and presenting two faces constituting counterblades.

6. A machine as claimed in Claim 1, characterized in that said shear (117) comprises a first blade (118) with a cutting edge defined along a downwardly-oblique segment in relation to the horizontal plane; and a second blade (118) with a cutting edge defined along an upwardly-oblique segment.

7. A machine as claimed in Claim 1, characterized in that said shearing tool (104) comprises two right-angle said shears (117) with said first blades (118) contiguous to each other, so that said shearing tool (104) presents a first corner (118a) defined by the starting points of the cutting edges of said two first blades (118), and a second corner (118b) defined by the end points of the cutting edges of said two second blades (118); said second corner (118b) being higher than said first corner (118a).

8. A machine as claimed in Claim 7, characterized in that said blades (118) of said shears (117) are the same length, so that, when viewed from above, said shearing tool (104) is square in shape.

9. A machine as claimed in Claim 1, characterized in that said hammer (16) comprises a striking portion (109) movable along an axis parallel to said second vertical axis (B); and in that it comprises a device (111) for rotating said striking portion (109) about said second vertical axis (B), to enable said striking portion (109) to operate selectively on one of said members (121).

10. A machine as claimed in Claims 1 and 9, characterized in that it comprises a device (21) for moving said hammer (16) along said second vertical axis (B), which hammer (16) travels a first distance to operate only said first blade (118) of one of said shears (117), and a second distance to operate both said blades (118) of said shear (117).

11. A machine as claimed in Claim 1, characterized in that said die (110) comprises a plate (137) presenting a central recess (139); two faces of said recess (139) constituting counterblades, and the upper edges of said faces constituting cutting edges.

12. A machine as claimed in the foregoing Claims, characterized in that it comprises:
a device (17) for rotating said shearing assembly (31, 100) about its vertical axis;
a device (17) for rotating said notching/slotting assembly (32) about its vertical axis;
a device (18) for rotating said first and second die assembly (56, 102) about its vertical axis;
said device (21) for moving said hammer (16) along said second vertical axis (B);
said device (111) for rotating said striking portion (109) about said second vertical axis (B);
a device (22) for controlling said carriage (12);
a device (23) for rotating said upper turret (7) about said first vertical axis (A);
a device (24) for rotating said lower turret (8) about said first vertical axis (A); and
an electronic control system (25) for controlling operation of the machine and in particular said devices.

## Patentansprüche

1. Eine Metallplatten-Stanzmaschine mit:
- einem oberen Revolver (7), der um eine erste vertikale Achse (A) dreht;
- einem unteren Revolver (8), der um die erste Achse (A) dreht;
- einer Arbeitsfläche (11);
- einem Träger (12) zum Greifen und Fördern der Platte (2) auf der Arbeitsfläche (11);
- einer Anzahl von Stanzwerkzeugen (14), die an dem oberen Revolver (7) gelagert sind;
- einer Anzahl von ersten Gesenken (15), die an dem unteren Revolver (8) gelagert sind;
- einem Hammer (16), der entlang einer zweiten vertikalen Achse (B) läuft;
- wenigstens einer Abscheranordnung (100), die an dem oberen Revolver (7) angeordnet ist; und
- einer entsprechenden ersten Gesenkanordnung (56, 102), die an dem unterem Revolver (8) gelagert ist;
wobei die Abscheranordnung (100) aufweist:
einen Abscherwerkzeughalter (103);
zwei unabhängige Bauteile (121), die in dem Abscherwerkzeughalter (103) aufgenommen sind; und
ein Abscherwerkzeug (104), welches an dem Abscherwerkzeughalter (103) angeordnet ist,
dadurch gekennzeichnet,
daß das Abscherwerkzeug zwei Scherklingen (117) aufweist, wobei jede Scherklinge durch zwei im Winkel zueinander stehende Schneidklingen (118) definiert ist, welche in vertikalen Ebenen und mit einem bestimmten Winkel bezüglich einander liegen, wobei eine erste Klinge (118) eine Schneidkante aufweist, welche entlang eines schräg nach oben verlaufenden Segmentes bezüglich der horizontalen Ebene definiert ist und eine zweite Klinge (118) eine Schneidkante aufweist, welche ebenfalls entlang eines schräg nach oben verlaufenden Segmentes definiert ist, jedoch eine Fortsetzung der Schneidkante der ersten Klinge (118) ist; wobei
die Abscheranordnung weiterhin dadurch gekennzeichnet ist, daß die beiden unabhängigen Bauteile (121), welche in dem Abscherwerkzeughalter (103) aufgenommen sind, jeweils mit einer entsprechenden Scherklinge (117) ausgestattet sind und jeweils unabhängig auf die entsprechende Scherklinge (117) die lineare, von dem Hammer (16) aufgebrachte Bewegung übertragen; wobei
die Maschine weiterhin dadurch gekennzeichnet ist, daß der Hammer (16) unterschiedliche Hübe durchführen kann.

2. Eine Maschine nach Anspruch 1, dadurch gekennzeichnet, daß sie wenigstens eine Kerb/Schlitzanordnung (32) aufweist, welche an dem oberen Revolver (7) angeordnet ist; und daß eine entsprechende zweite Gesenkanordnung (56) an dem unteren Revolver (8) angeordnet ist.

3. Eine Maschine nach Anspruch 1, dadurch gekennzeichnet, daß die Abscheranordnung (31) aufweist:
einen ersten Werkzeughalter (33), der an dem oberen Revolver (7) angeordnet ist;
ein Abscherwerkzeug (37), welches durch zwei Schneidklingen (38) definiert ist, wobei die erste Klinge (38) eine Schneidkante aufweist, welche durch ein schräg nach oben verlaufendes Segment bezüglich der horizontalen Ebene definiert ist und die zweite Klinge (38) eine Schneidklinge aufweist, welche ebenfalls entlang eines schräg nach oben verlaufenden Segmentes definiert ist, jedoch als Fortsetzung der Schneidkante der erste Klinge (38);
ein Bauteil (41), welches in dem ersten Werkzeughalter (33) aufgenommen ist, das Abscherwerkzeug (37) trägt und auf das Abscherwerkzeug (37) die von dem Hammer (16) aufgebrachte lineare Bewegung überträgt; und
vorgespannte Federmittel (53) zum Wirken gegen die nach unten gerichtete Bewegung des Abscherwerkzeuges (37).

4. Eine Maschine nach Anspruch 2, dadurch gekennzeichnet, daß die Kerb/Schlitzanordnung (32) aufweist:
einen zweiten Werkzeughalter (33), der an dem oberen Revolver (7) angeordnet ist;
ein Kerb/Schlitzwerkzeug (54), welches durch zwei Schneidklingen (55) definiert ist, wobei eine erste Klinge (55) eine Schneidkante aufweist, welche entlang eines schräg nach unten verlaufenden Segmentes gegenüber der horizontalen Ebene definiert ist und die zweite Klinge (55) eine Schneidkante aufweist, welche ebenfalls entlang eines schrägen Segmentes definiert ist, jedoch eines schräg nach oben verlaufenden Segmentes;
ein Bauteil (41), welches in dem zweiten Werkzeughalter (33) aufgenommen ist, das Kerb/Schlitzwerkzeug (54) trägt und auf das Kerb/Schlitzwerkzeug (54) die von dem Hammer (16) aufgebrachte lineare Bewegung überträgt; und
eine vorbelastete Federvorrichtung (53) zum Wirken gegen die nach unten gerichtete Bewegung des Kerb/Schlitzwerkzeuges (54).

5. Eine Maschine nach Anspruch 3 und 4, dadurch gekennzeichnet, daß die ersten und zweiten Gesenkanordnungen (56) aufweisen:
einen dritten Werkzeughalter (57), der an dem unteren Revolver (8) koaxial zu den entsprechenden ersten (33) und zweiten (33) Werkzeughaltern angeordnet ist;
einen Hohlraum (61), der in dem dritten Werkzeughalter (57) ausgebildet ist und umfangsseitig durch zwei flache vertikale Flächen senkrecht zueinander und durch eine dritte vertikale Fläche, welche einen Kreisbogen beschreibt, definiert ist;
eine erste Schulter (64), die in dem Hohlraum (61) ausgebildet ist, und zwei flache horizontale Flächen senkrecht zueinander und eine umfangsseitige Fläche, welche einen Kreisbogen beschreibt, aufweist;
eine zweite Schulter (65), die in der oberen Fläche des dritten Werkzeughalters (57) ausgebildet ist und eine halbkreisförmige Außenkante aufweist und deren Innenkante durch die senkrechten Flächen des Hohlraumes (61) definiert ist; und
ein Gesenk (66), welches eine Platte (67) aufweist, das an die zweite Schulter (65) angesetzt ist, und zwei Flächen aufweist, welche Gegenklingen bilden.

6. Eine Maschine nach Anspruch 1, dadurch gekennzeichnet, daß die Scherklinge (117) eine erste Klinge (118) mit einer Schneidkante, welche entlang eines schräg nach unten verlaufenden Segmentes bezüglich der horizontalen Ebene definiert ist und eine zweite Klinge (18) aufweist mit einer Schneidkante, welche entlang eines schräg nach oben verlaufenden Segmentes definiert ist.

7. Eine Maschine nach Anspruch 1, dadurch gekennzeichnet, daß das Abscherwerkzeug (104) zwei rechtwinklig angeordnete Scherklingen (117) mit den ersten Klingen (118) fortlaufend ineinander aufweist, so daß das Abscherwerkzeug (104) eine erste Ecke (118a), definiert durch die Ausgangspunkte der Schneidkanten der beiden ersten Klingen (118) und eine zweite Ecke (118b), definiert durch die Endpunkte der Schneidklinge der beiden zweiten Klingen (118) aufweist, wobei die zweite Ecke (118b) höher liegt als die erste Ecke (118a).

8. Eine Maschine nach Anspruch 7, dadurch gekennzeichnet, daß die Klingen (118) der Scherklingen (117) gleiche Länge haben, so daß, wenn es von oben betrachtet wird, das Abscherwerkzeug (104) quadratische Form hat.

9. Eine Maschine nach Anspruch 1, dadurch gekennzeichnet, daß der Hammer (16) ein Schlagbauteil (109) aufweist, welches entlang einer Achse parallel zur zweiten vertikalen Achse (B) beweglich ist; und daß er eine Vorrichtung (111) zum Drehen des Schlagbauteiles (109) um die zweite vertikale Achse (B) aufweist, um es dem Schlagbauteil (109) zu ermöglichen, selektiv eines der Bauteile (121) zu betreiben.

10. Eine Maschine nach Anspruch 1 und 9, dadurch gekennzeichnet, daß sie eine Vorrichtung (21) zum Bewegen des Hammers (16) entlang der zweiten vertikalen Achse (B) aufweist, wobei der Hammer (16) sich über eine erste Distanz bewegt, um nur die erste Klinge (118) einer der Scherklingen (117) zu betätigen und sich über eine zweite Distanz bewegt, um beide Klingen (118) der Scherklinge (117) zu betätigen.

11. Eine Maschine nach Anspruch 1, dadurch gekennzeichnet, daß das Gesenk (110) eine Platte (137) mit einer mittigen Vertiefung (139) aufweist, wobei zwei Flächen der Vertiefung (139) Gegenklingen bilden und die oberen Kanten der Flächen Schneidkanten bilden.

12. Eine Maschine nach einem der voranstehenden Ansprüche, dadurch gekennzeichnet, daß sie aufweist:
eine Vorrichtung (17) zum Drehen der Abscheranordnung (31, 100) um ihre vertikale Achse;
eine Vorrichtung (17) zum Drehen der Kerb/Schlitzanordnung (32) um ihre vertikale Achse;
eine Vorrichtung (18) zum Drehen der ersten und zweiten Gesenkanordnungen (56, 102) um ihre vertikalen Achsen;
die Vorrichtung (21) zum Bewegen des Hammers (16) entlang der zweiten vertikalen Achse (B);
die Vorrichtung (111) zum Drehen des Schlagabschnittes (109) um die zweite vertikale Achse (B);
eine Vorrichtung (22) zur Steuerung des Trägers (12);
eine Vorrichtung (23) zum Drehen des oberen Revolvers (7) um die erste vertikale Achse (A);
eine Vorrichtung (24) zum Drehen des unteren Revolvers (8) um die erste vertikale Achse (A); und
ein elektronisches Steuersystem (25) zur Steuerung der Arbeitsweise der Maschine und insbesondere der Vorrichtungen.

## Revendications

1. Poinçonneuse pour feuille métallique comprenant :
- un revolver supérieur (7) tournant autour d'un axe vertical (A) ;
- un revolver inférieur (8) tournant autour dudit axe (A) ;
- une surface de travail (11) ;
- un chariot (12) destiné à saisir et à amener ladite feuille (2) sur la surface de travail (11);
- un certain nombre de poinçons (14) supportés sur ledit revolver supérieur (7) ;
- un certain nombre de matrices (15) supportées sur ledit revolver inférieur (8) ;
- un marteau (16) se déplaçant le long d'un second axe vertical (B) ;
- au moins une unité de cisaillement (100) supportée sur ledit revolver supérieur (7) ; et
- une première unité de matrice correspondante (56, 102) supportée sur ledit revolver inférieur (8) ;
ladite unité de cisaillement (100) comprenant :
- un support d'outil de cisaillement (103) ;
- deux éléments indépendants (121) reçus dans ledit support d'outil de cisaillement (103) ; et
- un outil de cisaillement (104) fixé audit support d'outil de cisaillement (103), caractérisée en ce que l'outil de cisaillement comprend deux ciseaux (117), chaque ciseau étant défini par deux lames de coupe (118) reposant dans des plans verticaux et selon un angle donné l'une par rapport à l'autre ;
- une première lame (118) présentant une arête de coupe définie le long d'un segment obliquant vers le haut par rapport au plan horizontal ; et une seconde lame (118) présentant une arête de coupe également définie le long d'un segment obliquant vers le haut mais en prolongement de l'arête de coupe de ladite première lame ; l'unité de cisaillement étant également caractérisée en ce que deux éléments indépendants (121) logés dans ledit support d'outil de cisaillement (103) sont équipés chacun d'un ciseau respectif (117) et transmettent chacun indépendamment à son ciseau respectif (117) le mouvement linéaire imparti par ledit marteau (16) ; la machine étant également caractérisée en ce que le marteau (16) peut effectuer plusieurs courses.

2. Machine selon la revendication 1, caractérisée en ce qu'elle comprend au moins une unité d'encochage / rainurage (32) supportée sur ledit revolver supérieur (7) et une seconde unité de matrice correspondante (56) supportée sur ledit revolver inférieur (8).

3. Machine selon la revendication 1, caractérisée en ce que ladite unité de cisaillement (31) comprend :
- un premier support d'outil (33) supporté sur ledit revolver supérieur (7) ;
- un outil de cisaillement (37), défini par deux lames de coupe (38), une première lame (38) présentant une arête de coupe définie le long d'un segment obliquant vers le haut par rapport au plan horizontal ; et une seconde lame (38) présentant une arête de coupe également définie le long d'un segment obliquant vers le haut mais en prolongement de l'arête de coupe de ladite première lame (38) ;
- un élément (41) logé dans ledit premier support d'outil (33) et supportant ledit outil de cisaillement (37) et transmettant audit
outil de cisaillement (37) le mouvement linéaire imparti par ledit marteau (16) ; et
- des moyens de ressort précontraints (53) destinés à contrebalancer le mouvement vers le bas dudit outil de cisaillement (37).

4. Machine selon la revendication 2, caractérisée en ce que ladite unité d'encochage / rainurage (32) comprend :
- un second support d'outil (33) supporté sur ledit revolver supérieur (7) ;
- un outil d'encochage / rainurage (54), défini par deux lames de coupe (55), une première lame (55) présentant une arête de coupe définie le long d'un segment obliquant vers le bas par rapport au plan horizontal ; et la seconde lame (55) également définie le long d'un segment obliquant vers le haut ;
- un élément (41) logé dans ledit second support d'outil (33) et supportant ledit outil d'encochage / rainurage (54) et transmettant audit outil d'encochage / rainurage (54) le mouvement linéaire imparti par ledit marteau (16) ; et
- des moyens de ressort précontraints (53) destinés à contrebalancer le mouvement vers le bas dudit outil d'encochage / rainurage (54).

5. Machine selon les revendications 3 et 4, caractérisée en ce que lesdites première et seconde unités de matrice (56) comprennent :
- un troisième support d'outil (57) supporté sur ledit revolver inférieur (8) de manière coaxiale par rapport audit premier (33) et second (33) support d'outil respectifs ;
- une cavité (61) formée dans ledit troisième support d'outil (57) et définie de manière périphérique par deux faces verticales plates perpendiculaires l'une par rapport à l'autre et par une troisième face verticale décrivant un arc de cercle ;
- un premier épaulement 64 formé dans ladite cavité (61) et présentant deux faces horizontales plates perpendiculaires l'une par rapport à l'autre et une face perpendiculaire décrivant un arc de cercle ;
- un second épaulement (65) formé sur la face supérieure du troisième support d'outil (57) et présentant une arête externe semi-annulaire et une arête interne définie par les faces perpendiculaires de ladite cavité (61) ; et
- une matrice (66) qui comprend une plaque (67) fixée audit second épaulement (65) et présentant deux faces constituant des contre-lames.

6. Machine selon la revendication 1, caractérisée en ce que ledit ciseau (117) comprend une première lame (118) avec une arête de coupe définie le long d'un segment obliquant vers le haut par rapport au plan horizontal et une seconde lame (118) définie le long d'un segment obliquant vers le haut.

7. Machine selon la revendication 1, caractérisée en ce que ledit outil de cisaillement (104) comprend deux ciseaux à angle droit (117) avec lesdites premières lames (118) contiguës l'une par rapport à l'autre, de sorte que ledit outil de cisaillement (104) présente un premier coin (118a) défini par les points de départ des arêtes de coupe desdites deux premières lames (118) et un second coin (118b) défini par les points de fin des arêtes de coupe desdites deux secondes lames (118) ; ledit premier coin (118a) étant plus haut que ledit second coin (118b).

8. Machine selon la revendication 7, caractérisée en ce que lesdites lames (118) desdits ciseaux (117) ont la même longueur de sorte que, lorsqu'on le voit du dessus, ledit outil de cisaillement (104) a une forme carrée.

9. Machine selon la revendication 1, caractérisée en ce que ledit marteau (16) comprend une portion de frappe (109) pouvant se déplacer le long d'un axe parallèle audit second axe vertical (B) et en ce qu'il comprend un dispositif (111) destiné à faire tourner ladite portion de frappe (109) autour dudit second axe vertical (B), pour permettre à ladite portion de frappe (109) de fonctionner de manière sélective sur l'un desdits éléments (121).

10. Machine selon la revendication 1 et 9, caractérisée en ce qu'elle comprend un dispositif (21) destiné à déplacer ledit marteau (16) le long dudit second axe vertical (B), ledit marteau (16) se déplace selon une première distance pour actionner uniquement ladite première lame (118) de l'un desdits ciseaux (117) et selon une seconde distance pour actionner les deux dites lames (118) dudit ciseau (117).

11. Machine selon la revendication 1, caractérisée en ce que ladite matrice (110) comprend une plaque (137) présentant un évidement central (139), deux faces dudit évidement (139) constituant des contre-lames et les arêtes supérieures desdites faces constituant des arêtes de coupe.

12. Machine selon l'une quelconque des revendications précédentes, caractérisée en ce qu'elle comprend :
- un dispositif (17) destiné à faire tourner ladite unité de cisaillement (31, 100) autour de son axe vertical ;
- un dispositif (17) destiné à faire tourner ladite unité d'encochage / rainurage (32) autour de son axe vertical ;
- un dispositif (18) destiné à faire tourner lesdites première et seconde unité de matrice (56, 102) autour de son axe vertical ;
- ledit dispositif (21) destiné à faire tourner ledit marteau (16) le long dudit second axe vertical (B) ;
- ledit dispositif (111) destiné à faire tourner ladite portion de frappe (109) autour dudit second axe vertical (B) ;
- un dispositif (22) destiné à contrôler ledit chariot (12) ;
- un dispositif (23) destiné à faire tourner ledit revolver supérieur (7) autour dudit premier axe vertical (A) ;
- un dispositif (24) destiné à faire tourner ledit revolver inférieur (8) autour dudit premier axe vertical (A) ; et
- un système de contrôle électronique (25) destiné à contrôler le fonctionnement de la machine et en particulier desdits dispositifs.
